# EUROPEAN PATENT APPLICATION

(11) **EP 2 735 898 A1**
(43) Date of publication of application: **28.05.2014**
(21) Application number: 12290405.5
(22) Date of filing: 21.11.2012
(51) Int. Cl.: G02B 6/42

(54) **Cooling of optoelectronic modules**

(71) Applicant: Alcatel Lucent, 75007 Paris (FR)
(72) Inventor: Goetz, Hans-Joachim, 90411 Nuernberg (DE); Haberditzl, Rainer, 90482 Nuernberg (DE); Seitz, Reinhold, 91161 Hilpoltstein (DE)
(74) Representative: DREISS Patentanwälte PartG mbB

(57) **Abstract**

The present invention relates to a device (1) for cooling of at least one optoelectronic module (2) that is arranged on a circuit board (3), comprising a cooling body (4) with a heat absorbing section (5) and a cooling section (6), wherein the cooling section (6) is heat-conductively connected to the heat absorbing section (5) and is at least partly provided with cooling ribs (7) and/or cooling pins, wherein said heat absorbing section (5) can be arranged on the side of the optoelectronic module (2) facing away from the circuit board (3) and can be heat-conductively connected to the optoelectronic module (2), characterized in that, when the device (1) is arranged as intended on the optoelectronic module (2), the cooling section (6) laterally projects beyond the optoelectronic module (2), wherein the cooling ribs (7) and/or cooling pins are arranged on the surface (8) of the cooling section (6) facing the circuit board (3) and/or are arranged on a surface (9, 10, 11) of the cooling section (6), which runs transverse to the surface (8) of the cooling section (6) facing the circuit board (3).

## Description

### TECHNICAL FIELD

The present invention relates to the area of cooling of optoelectronic modules placed on circuit boards and, more particularly but not exclusively, to cooling of optoelectronic modules placed at the front side of vertically arranged circuit boards.

### BACKGROUND

In order to be able to transform electric signals into optic signals and vice versa, communication systems are provided with optoelectronic modules, for example in form of pluggable transceivers (e.g. SFP, XFP, CFP). For this purpose pluggable optoelectronic modules are arranged on a circuit board with correspondingly constructed connecting elements with an additional individual heatsink per module.

In use, the optoelectronic modules generate heat which has to be dissipated from the optoelectronic modules to prevent heat damages. Therefore, it is known to cool optoelectronic modules by connecting them with one or more cooling devices.

Because the space to place a cooling device on an optoelectronic module is very limited, especially due to a desired narrow arrangement of the connecting elements of an electric assembly, it is sometimes not possible to place a suitable cooling device directly on the heat producing area of an optoelectronic module. Therefore, a cooling solution is desired which allows effective cooling of optoelectronic modules even if the space for a placement of suitable cooling devices is very limited.

### SUMMARY

Various embodiments provide a cooling device, an optoelectronic module and an electric assembly of providing a solution for providing effective cooling of optoelectronic modules.

In a first embodiment, a device is provided for cooling at least one optoelectronic module that is arranged on at least one side of a circuit board, comprising a cooling body with a heat absorbing section and a cooling section, wherein the cooling section is heat-conductively connected to the heat absorbing section and is at least partly provided with cooling ribs and/or cooling pins, wherein said heat absorbing section can be arranged on the side of the optoelectronic module facing away from the circuit board and can be heat-conductively connected to the optoelectronic module, characterized in that, when the device is arranged as intended on the optoelectronic module, the cooling section laterally projects beyond the optoelectronic module, wherein the cooling ribs and/or cooling pins are arranged on the surface of the cooling section facing the circuit board and/or are arranged on a surface of the cooling section, which runs transverse to the surface of the cooling section facing the circuit board.

According to the device of the first embodiment, heat produced by at least one optoelectronic module can be dissipated from the optoelectronic module by heat-conductively connecting the heat absorbing section of the cooling body to the optoelectronic module. From the heat absorbing section heat is dissipated to the cooling section of the cooling body, wherein the cooling section is heat-conductively connected to said heat absorbing section. When the device according to the first embodiment is arranged as intended on the optoelectronic module, the cooling section laterally projects beyond the optoelectronic module. Therefore, according to the first embodiment, heat produced by an optoelectronic module can be dissipated from the heat dissipating area of an optoelectronic module by a heat absorbing section which can be constructed relative small-sized with respect to a conventional cooling device. Thus, the device according to the first embodiment can be used even when the space to place such a device is very limited.

As mentioned before, when the device according to the first embodiment is arranged as intended on the optoelectronic module, the cooling section of the cooling body laterally projects beyond the optoelectronic module. Therefore, the cooling section is positioned in an area beside the optoelectronic module where more space is available. Thus, the heat dissipating cooling section can be dimensioned larger than the heat absorbing section to improve the cooling characteristics of the cooling section.

According to a preferred embodiment of the first embodiment the cooling section is designed as a rectilinear extension of the heat absorbing section. This embodiment is simple to realize. The length of the cooling section may be varied according to the available space and/or in order to achieve desired cooling characteristics.

According to a preferred embodiment of the first embodiment the cooling section is arranged angled to the heat absorbing section at an angle that is located in a plane which is disposed parallel to and spaced from the circuit board. Through this, when a certain space for placement of a cooling section is provided, the cooling section can be constructed longer than a cooling section which is designed as a rectilinear extension of the heat absorbing section. In addition, more cooling ribs and/or cooling pins can be arranged on the cooling section. Thus, cooling characteristics can be further enhanced by this embodiment.

According to a preferred embodiment of the first embodiment the cooling section is formed integrally with the heat absorbing section. Such a cooling body can be easily constructed, wherein the heat-conductive connection between the heat absorbing section and the cooling section is simply achieved.

According to a preferred embodiment of the first embodiment at least one heat pipe is arranged in the cooling body, wherein the heat pipe extends within both the cooling section and the heat absorbing section. The arrangement of a heat pipe in the cooling body further enhances the cooling characteristics of the cooling body. A heat pipe is a heat-transfer device that combines the principles of both thermal conductivity and phase transition to efficiently manage the transfer of heat between two solid interfaces. At the hot interface within a heat pipe a liquid in contact with a thermally conductive solid surface turns into a vapor by absorbing heat from that surface. The vapor condenses back into a liquid at the cold interface, releasing the latent heat. The liquid then returns to the hot interface through either capillary action or gravity action where it evaporates once more and repeats the cycle. In addition, the internal pressure of the heat pipe can be set or adjusted to facilitate the phase change depending on the demands of the working conditions of the thermally managed system. Therefore, the liquid is condensed in the heat pipe section running through the heat absorbing section. The generated vapor condenses back into a liquid in the heat pipe section running through the cooling section.

According to a preferred embodiment of the latest preceding embodiment the heat pipe is arranged in the region of the surface of the cooling body facing away from the optoelectronic module when the cooling device is arranged as intended on the optoelectronic module. Through this, heat absorbed by the heat pipe can be easily guided to the surface of the cooling body facing away from the circuit board, and therefore, heat dissipation from the optoelectronic module can be further enhanced by this embodiment.

According to a preferred embodiment of the two latest embodiments, when the device is arranged as intended on the optoelectronic module, the heat pipe is at least partly arranged angled upwards starting from the heat absorbing section. Through this embodiment, liquid being produced by condensed vapor in the cooling section can return to the hot interface of the heat pipe section running through the heat absorbing section by gravity action.

In a second embodiment, an optoelectronic device is provided, comprising a circuit board, at least one optoelectronic module arranged on the circuit board, and at least one device for cooling the optoelectronic module, wherein the device for cooling the optoelectronic module is heat-conductively connected to the optoelectronic module, wherein the device for cooling the optoelectronic module is designed according to one of the preceding embodiments or any combination of these embodiments. Through this, the above advantages can be achieved.

In a third embodiment, an electric assembly having at least one optoelectronic device and at least one connecting element, wherein the optoelectronic device comprises a circuit board and at least one optoelectronic module arranged on the circuit board, wherein the optoelectronic device, for producing electrically conductive connections between the optoelectronic module and the connecting element, can be partly inserted into the connecting element, wherein the connecting element, when the connecting element is arranged as intended, is arranged in such a way that the circuit board of the optoelectronic device, when the circuit board is inserted in the connecting element as intended, is vertically arranged, and wherein the optoelectronic device is designed according to the preceding embodiment. Thereby, the above advantages are achieved.

According to a preferred embodiment of the third embodiment, the cooling body of the device for cooling the optoelectronic module is designed in such a way that the cooling section of the cooling body, when the circuit board is inserted in the connecting element (subrack or chassis) as intended, extends upwards starting from the heat absorbing section. Thereby, when a certain space for placement of a cooling section is provided, the cooling section can be constructed longer than a cooling section which extends horizontally. Therefore, more cooling ribs and/or cooling pins can be arranged on the cooling section. Thus, cooling characteristics can be further enhanced by this embodiment. Preferably, this embodiment is achieved by using a cooling device according to the above mentioned embodiment of the first embodiment, wherein the cooling section is arranged angled to the heat absorbing section at an angle that is located in a plane which is disposed parallel to and spaced from the circuit board.

According to a preferred embodiment of the third embodiment, the cooling ribs extend vertically on the cooling section and/or the cooling pins are arranged in vertical rows on the cooling section. This embodiment enables effective cooling of an optoelectronic module because cooling by air convection is enhanced.

According to a preferred embodiment of the third embodiment, at least two optoelectronic modules are arranged on the circuit board on top of each other when the circuit board is inserted in the connecting element as intended, wherein each optoelectronic module is heat-conductively connected to a device for cooling the optoelectronic module, wherein the cooling sections of the cooling bodies of the devices differ from each other in the number and/or the type of arrangement of the cooling ribs and/or cooling pins arranged on said cooling sections. Through this, cooling characteristics caused by air convection can be further enhanced.

According to a preferred embodiment of the last preceding embodiment, on at least one surface of the cooling section of one of the cooling bodies less cooling ribs and/or cooling pins are arranged than on the corresponding surface of the cooling section of a further cooling body that arranged on top of the first cooling body. Therefore, upstream airflow can be increased and cooler air reaches the upper cooling sections.

According to a preferred embodiment of the third embodiment, at least two optoelectronic modules are arranged on the circuit board on top of each other when the circuit board is inserted in the connecting element (subrack or chassis) as intended, wherein each optoelectronic module is heat-conductively connected with a device for cooling the optoelectronic module, wherein the cooling section of the cooling body of one of the devices is arranged at an angle to the circuit board which is greater than the angle between the cooling section of the cooling body of a further device arranged on top of the first device. Therefore, airflow from the bottom to the top of an optoelectronic module can be enhanced, in particular, airflow can be increased and cooler air reaches the upper cooling sections.

### BRIEF DESCRIPTION OF THE DRAWINGS

Some embodiments of the device in accordance with the present invention are now described, by way of example only, and with reference to the accompanying drawings, in which:
- Fig. 1a: is a schematic top view showing a first embodiment of a device,
- Fig. 1b: is a schematic side view of the device shown in Fig. 1a,
- Fig. 2a: is a schematic top view showing a second embodiment of a device,
- Fig. 2b: is a schematic side view of the device shown in Fig. 2a,
- Fig. 3a: is a schematic top view showing a third embodiment of a device,
- Fig. 3b: is a schematic side view of the device shown in Fig. 3a,
- Fig. 4a: is a schematic top view showing a forth embodiment of a device,
- Fig. 4b: is a schematic side view of the device shown in Fig. 4a,
- Fig. 5: is a schematic side view of an embodiment of an optoelectronic module,
- Fig. 6: is a schematic view of an embodiment of an electric assembly, and
- Fig. 7: is a schematic view of a further embodiment of an electric assembly.

### DETAILED DESCRIPTION OF ILLUSTRATIVE EMBODIMENTS

The description and drawings merely illustrate the principles of the invention. Additionally, the term, "or," as used herein, refers to a non-exclusive or, unless otherwise indicated (e.g., "or else" or "or in the alternative"). Also, the various embodiments described herein are not necessarily mutually exclusive, as some embodiments can be combined with one or more other embodiments to form new embodiments.

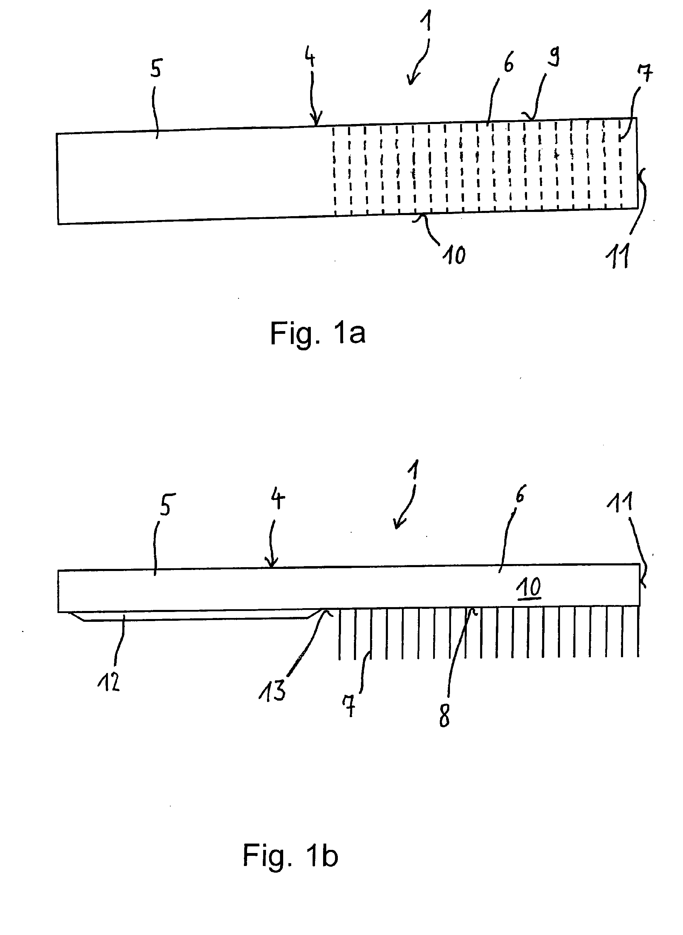

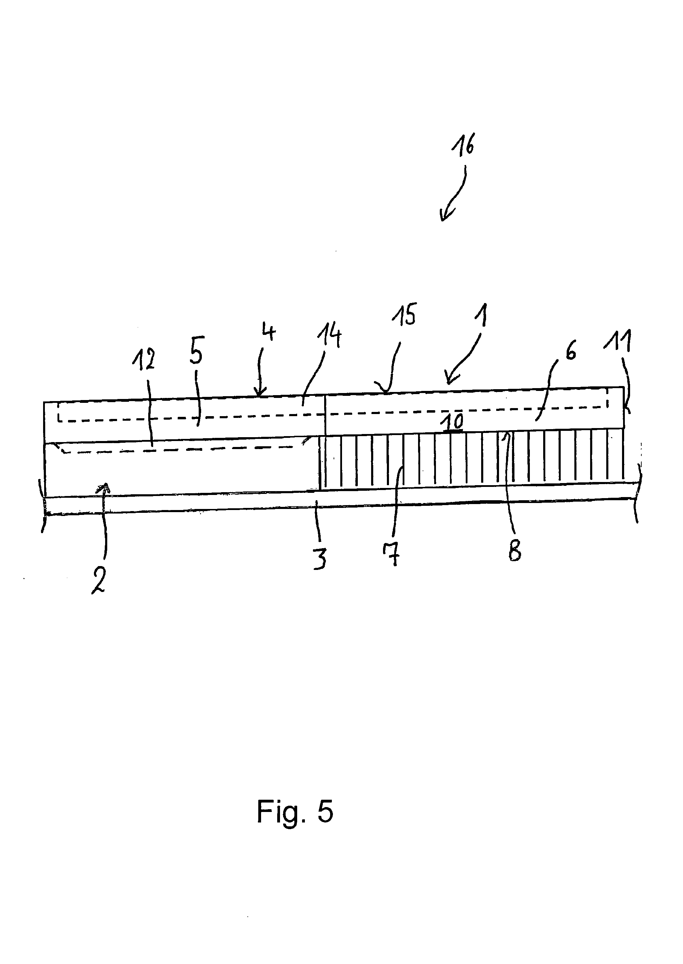

Figure 1a schematically shows a top view of a device 1 for cooling an optoelectronic module 2 that is arranged on one side of a circuit board 3 as shown in figure 5. The device 1 comprises a cooling body 4 with a heat absorbing section 5 and a heat dissipating cooling section 6, wherein the cooling section 6 is heat-conductively connected to the heat absorbing section 5 and is at least partly provided with cooling ribs 7. The cooling section 6 is designed as a rectilinear extension of the heat absorbing section 5 and is formed integrally with the heat absorbing section 5. The device 1 is at least partly made form a suitable metal. In use, the device 1 is arranged as shown in figure 1a.

As shown in figure 5, the heat absorbing section 5 can be arranged on the side of the optoelectronic module 2 facing away from the circuit board 3 and can be heat-conductively connected to the optoelectronic module 2. Therefore, the heat absorbing section 5 can be connected with the optoelectronic module 2 for dissipating heat produced by the optoelectronic module 2 in an operating state away from the optoelectronic module 2. The heat absorbing section 5 comprises a contact element 12 which can be thermally connected directly to a not shown heat producing part of the optoelectronic module 2. As shown in figure 1b, the contact element 12 extends at least partly from the surface 13 of the remaining heat absorbing section 5.

When the device 1 is arranged as intended on the optoelectronic module 2 as shown in figures 5 to 7 the cooling section 5 laterally projects beyond the optoelectronic module 2, wherein the cooling ribs 7 are arranged on the surface 8 of the cooling section 6 facing the circuit board 3 as shown in figure 1b. Additionally, cooling ribs 7 may also be arranged on a side of the cooling section 6, which runs transverse to the side of the cooling section 6 facing the circuit board, i. e. cooling ribs 7 may also be provided on the lateral surface 9, lateral surface 10 and/or end surface 11 of the cooling section 6 shown in figure 1a. The cooling ribs 7 are arranged parallel to each other on the surface 8 of the cooling section 6 extending at least partly from lateral surface 9 to the lateral surface 10 of the cooling section 6.

Figure 1b schematically shows a side view of the device 1 according to figure 1a. As can be seen from figure 1b the contact element 12 extends at least partly from the surface 13 of the heat absorbing section 5. The cooling ribs 7 extend from the surface 8 of the cooling section 6.

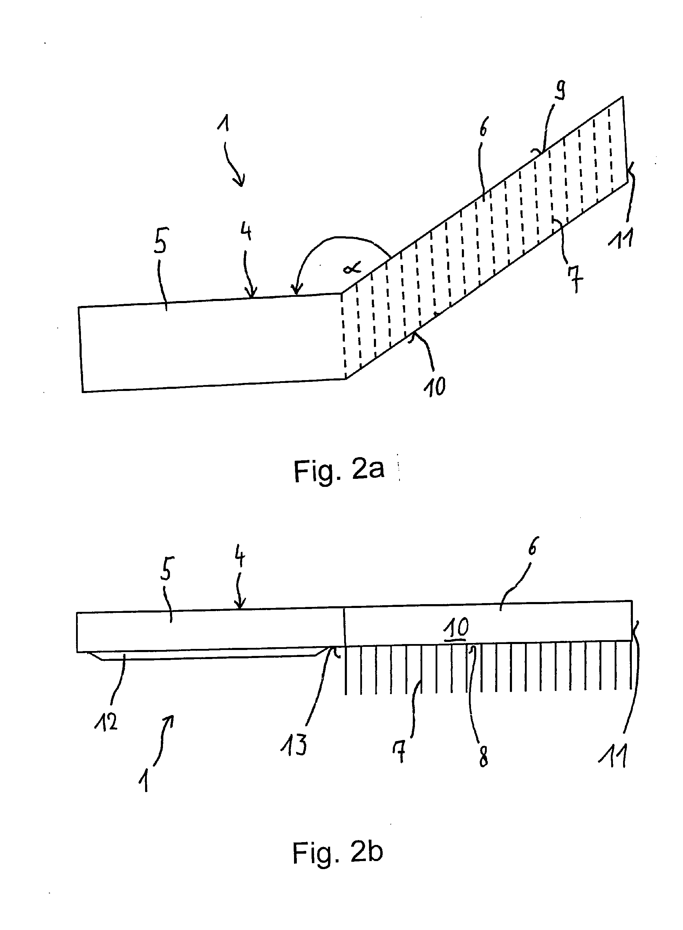

Figure 2a is a schematic top view showing a second embodiment of a device 1, wherein, in use, the device 1 is arranged as shown in figure 2a. The second embodiment of the device 1 differs from the first embodiment of the device 1 shown in figures 1a and 1b in that the cooling section 6 is arranged angled to the heat absorbing section 5 at an angle α that is located in a plane which is disposed parallel to and spaced from the circuit board 3.

Fig. 2b schematically shows a side view of the device 1 according to Fig. 2a.

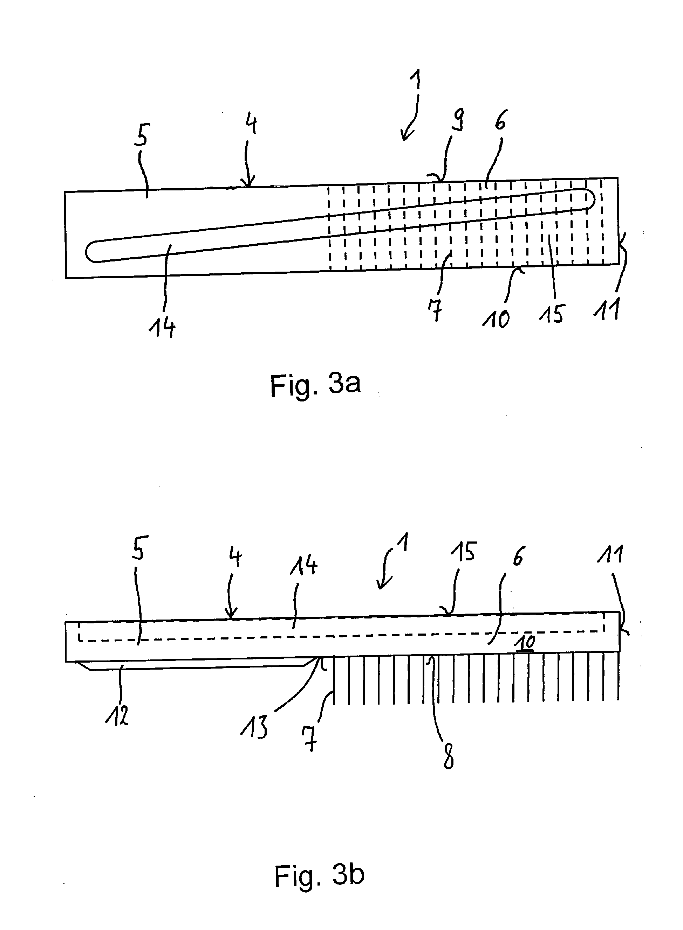

Fig. 3a is a schematic top view showing a third embodiment of a device 1, wherein, in use, the device 1 is arranged as shown in figure 3a. The third embodiment of the device 1 differs from the first embodiment of the device 1 shown in figures 1a and 1b in that a heat pipe 14 is arranged in the cooling body 4, wherein the heat pipe 14 extends within both the heat absorbing section 5 and the dissipating cooling section 6. The heat pipe 14 is arranged in an ascending manner in the cooling body 4, wherein the end of the heat pipe 14 arranged in the heat absorbing section 5 is located lower than the other end of the heat pipe 14 that is located in the cooling section 6. The heat pipe 14 is placed in a correspondingly formed recess in the surface 15 of the cooling body 4.

Fig. 3b schematically shows a side view of the device 1 according to Fig. 3a. As can be seen from figure 3b, the heat pipe 14 is arranged in the region of the surface 15 of the cooling body 4 facing away from the optoelectronic module 2 when the device 1 is arranged as intended on the optoelectronic module 2.

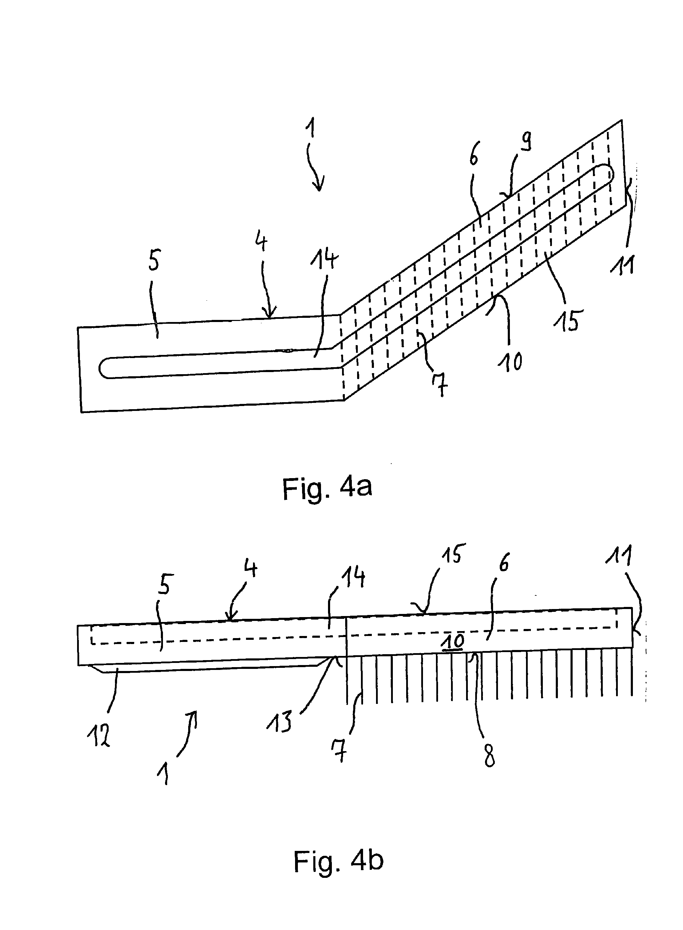

Fig. 4a is a schematic top view showing a forth embodiment of the device 1, wherein, in use, the device 1 is arranged as shown in figure 4a. The forth embodiment of the device 1 differs from the second embodiment of the device 1 shown in figures 2a and 2b in that a heat pipe 14 is arranged in the cooling body 4, wherein the heat pipe 14 extends within both the heat absorbing section 5 and the cooling section 6. The heat pipe 14 is centrally arranged both in the heat absorbing section 5 and in the cooling section 6. Therefore, the part of the heat pipe 14 extending through the cooling section 6, starting from the connection between the heat absorbing section 5 and the cooling section 6, is arranged in an ascending manner. The heat pipe 14 is placed in a correspondingly formed recess in the surface 15 of the cooling body 4.

Fig. 4b schematically shows a side view of the device 1 according to Fig. 4a. As can be seen from figure 4b, the heat pipe 14 is arranged in the region of the surface 15 of the cooling body 4 facing away from the optoelectronic module 2 when the device 1 is arranged as intended on the optoelectronic module 2.

Fig. 5 is a schematic side view of an embodiment of an optoelectronic device 16. The optoelectronic module comprises a circuit board 3, at least one optoelectronic module 2 arranged on one side of the circuit board 3, and at least one device 1 for cooling the optoelectronic module 2. The device 1 for cooling the optoelectronic module 2 is heat-conductively connected to the optoelectronic module 2. The device 1 for cooling the optoelectronic module 2 of the optoelectronic device 16 is constructed according to the forth embodiment of the device 1 as shown in figures 4a and 4b. In some embodiments of the optoelectronic device 16, the device 1 may be constructed in accordance with the above described first, second or third embodiment. Moreover, the optoelectronic device 16 can comprise two or more optoelectronic modules 2 and a corresponding number of devices 1 according to one aforementioned specific embodiment or in form of a combination of different embodiments. The cooling ribs 7 extend over nearly the whole space available between the cooling section 6 and the circuit board 3. The circuit board 3 may be a printed circuit board. The optoelectronic module 2 comprises a housing 17 in which a heat producing part, which is not shown, of the optoelectronic module 2 is housed. The contact element 12 of the device 1 extends at least partly into the housing 17 of the optoelectronic module 2.

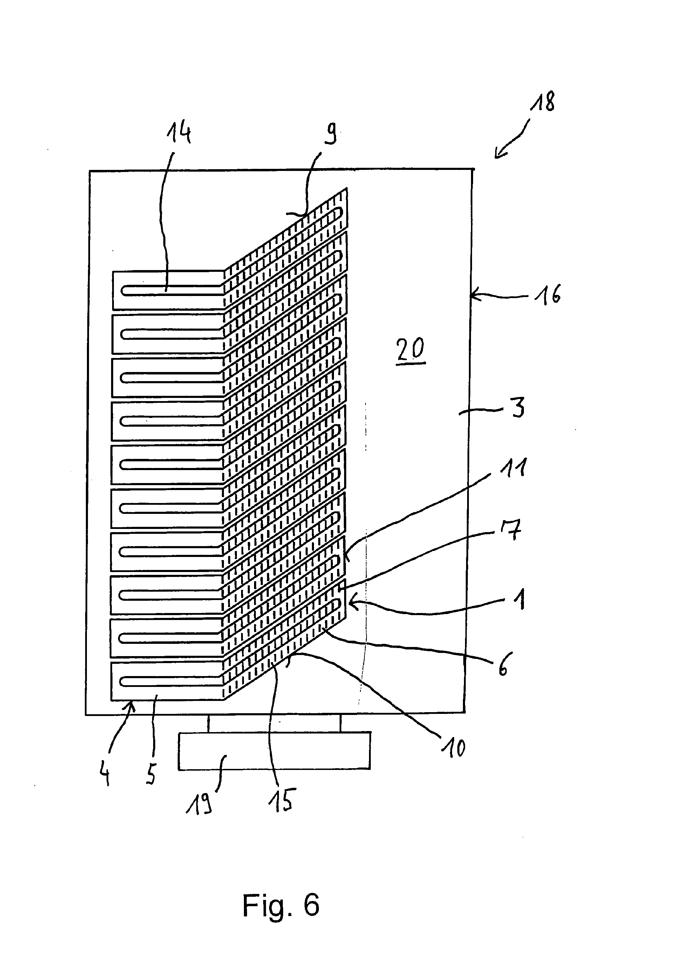

Fig. 6 is a schematic view of an embodiment of an electric assembly 18. The electric assembly 18 comprises at least one optoelectronic device 16 having a circuit board 3, ten optoelectronic modules 2 (not shown) arranged on top of each other on the front side 20 of the circuit board 3, and ten devices 1 according to the above described forth embodiment of the device 1 which are heat-conductively connected to the optoelectronic modules 2 and are arranged on top of each other. Furthermore, the electric assembly 18 has at least one connecting element 19, wherein the optoelectronic device 16, for producing electrically conductive connections between the optoelectronic modules 2 and the connecting element 19, is partly inserted into the connecting element 19. When the connecting element 19 is arranged as intended, like is shown in figure 6, the connecting element 19 is arranged in such a way that the circuit board 3 of the optoelectronic device 16, when inserted in the connecting element 19 as shown, is vertically arranged. The cooling bodies 4 of the devices 1 for cooling the optoelectronic modules 2 of the optoelectronic device 16 are designed in such a way that the cooling sections 6 of the cooling bodies 4, when the circuit board 3 is inserted as intended in the connecting element 19 as shown in figure 6, extend upwards starting from the respective connection between the heat absorbing section 5 and the cooling section 6. As can be seen from figure 6, the cooling ribs 7 extend vertically on the cooling sections 6. The cooling sections 6 of the cooling bodies 4 of the devices 1 may differ from each other in the number and the type of arrangement of the cooling ribs 7 arranged on said cooling sections 6. For example, the cooling section 6 of the lowest device 1 is provided with ten cooling ribs 7, the cooling section 6 of the device 1 located directly above the lowest device 1 is provided with 14 cooling ribs 7, and so on. Moreover, the cooling ribs 7 of the cooling sections 6 may be staggered.

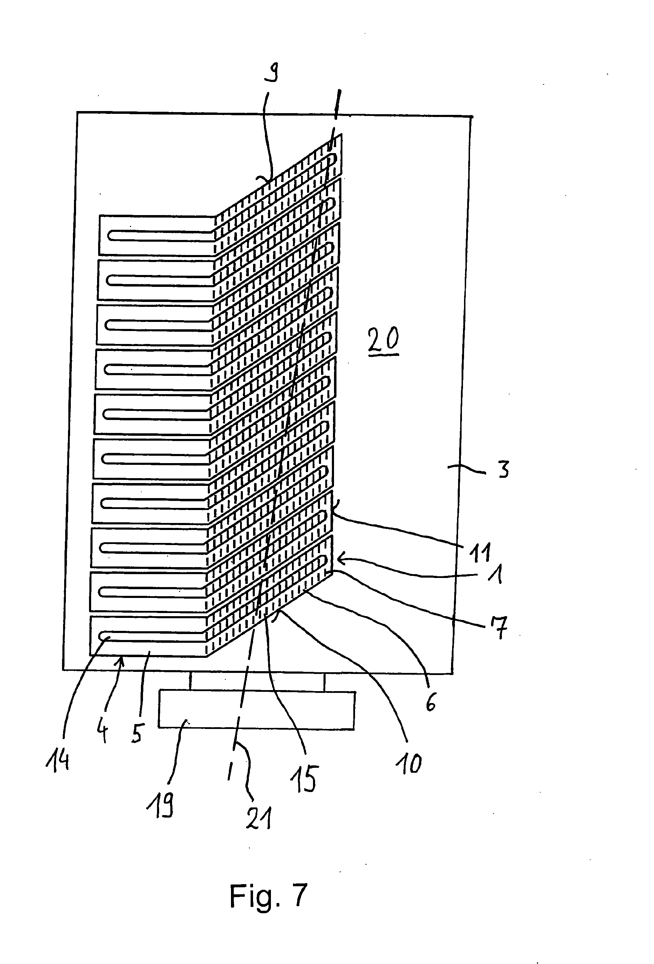

Figure 7 is a schematic view of a further embodiment of an electric assembly 18. This further embodiment differs from the embodiment of the electric assembly according to figure 6 in that the cooling section 6 of the cooling body 4 of the lowest device 1 is arranged at an angle to the circuit board 3 which is greater than the angle between the cooling section 6 of the cooling body 4 of the second lowest device 1 arranged on top of the lowest device 1, the cooling section 6 of the cooling body 4 of the second lowest device 1 is arranged at an angle to the circuit board 3 which is greater than the angle between the cooling section 6 of the cooling body 4 of the third lowest device 1 arranged on top of the second lowest device 1, and so on. This arrangement shall be illustrated by the line 21 which is arranged parallel to and spaced from the circuit board 3.

## Claims

1. A device (1) for cooling of at least one optoelectronic module (2) that is arranged on a circuit board (3), comprising a cooling body (4) with a heat absorbing section (5) and a cooling section (6), wherein the cooling section (6) is heat-conductively connected to the heat absorbing section (5) and is at least partly provided with cooling ribs (7) and/or cooling pins, wherein said heat absorbing section (5) can be arranged on the side of the optoelectronic module (2) facing away from the circuit board (3) and can be heat-conductively connected to the optoelectronic module (2),
**characterized in that**,
when the device (1) is arranged as intended on the optoelectronic module (2), the cooling section (6) laterally projects beyond the optoelectronic module (2), wherein the cooling ribs (7) and/or cooling pins are arranged on the surface (8) of the cooling section (6) facing the circuit board (3) and/or are arranged on a surface (9, 10, 11) of the cooling section (6), which runs transverse to the surface (8) of the cooling section (6) facing the circuit board (3).

2. The device (1) according to claim 1,
**characterized in that**
the cooling section (6) is designed as a rectilinear extension of the heat absorbing section (5).

3. The device (1) according to claim 1,
**characterized in that**
the cooling section (6) is arranged angled to the heat absorbing section (5) at an angle (α) that is located in a plane which is disposed parallel to and spaced from the circuit board (3).

4. The device (1) according to one of the preceding claims, **characterized in that** the cooling section (6) is formed integrally with the heat absorbing section (5).

5. The device (1) according to one of the preceding claims,
**characterized in that**
at least one heat pipe (14) is arranged in the cooling body (4), wherein the heat pipe (14) extends within both the cooling section (6) and the heat absorbing section (5).

6. The device (1) according to claim 5,
**characterized in that**
the heat pipe (14) is arranged in the region of the surface (15) of the cooling body (4) facing away from the optoelectronic module (2) when the device (1) is arranged as intended on the optoelectronic module (2).

7. The device (1) according to claim 5 or 6,
**characterized in that**,
when the device (1) is arranged as intended on the optoelectronic module (2), the heat pipe (14) is at least partly arranged angled upwards starting from the heat absorbing section (5).

8. An optoelectronic device (16), comprising a circuit board (3), at least one optoelectronic module (2) arranged on the circuit board (3), and at least one device (1) for cooling the optoelectronic module (2), wherein the device (1) for cooling the optoelectronic module (2) is heat-conductively connected to the optoelectronic module (2), **characterized in that** the device (1) is designed according to one of the preceding claims.

9. An electric assembly (18) having at least one optoelectronic device (16) and at least one connecting element (19), wherein the optoelectronic device (16) comprises a circuit board (3) and at least one optoelectronic module (2) arranged on the circuit board (3), wherein the optoelectronic module (2), for producing electrically conductive connections between the optoelectronic module (2) and the connecting element (19), can be partly inserted into the connecting element (19), wherein the connecting element (19), when the connecting element (19) is arranged as intended, is arranged in such a way that the circuit board (3) of the optoelectronic device (16), when the circuit board (3) is inserted in the connecting element (19) as intended, is vertically arranged, **characterized in that** the optoelectronic device (16) is designed according to claim 8.

10. The electric assembly (18) according to claim 9,
**characterized in that** the cooling body (4) of the device (1) for cooling the optoelectronic module (2) is designed in such a way that the cooling section (6) of the cooling body (4), when the circuit board (3) is inserted in the connecting element (19) as intended, is arranged angled upwards starting from the heat absorbing section (5).

11. The electric assembly (18) according to claim 10,
**characterized in that**
the cooling ribs (7) extend vertically on the cooling section (6) and/or the cooling pins are arranged in vertical rows on the cooling section (6).

12. The electric assembly (18) according to claim 9,
**characterized in that**
at least two optoelectronic modules (2) are arranged on the circuit board (3) on top of each other when the circuit board (3) is inserted in the connecting element (19) as intended, wherein each optoelectronic module (2) is heat-conductively connected to its own device (1) for cooling an optoelectronic module (2), wherein the cooling sections (6) of the cooling bodies (4) of the devices (1) differ from each other in the number and/or the type of arrangement of the cooling ribs (7) and/or cooling pins.

13. The electric assembly (18) according to claim 12,
**characterized in that**
on at least one surface (8, 9, 10, 11) of the cooling section (6) of the cooling body (4) of a first device (1) for cooling an optoelectronic module (2) less cooling ribs (7) and/or cooling pins are arranged than on the corresponding surface (8, 9, 10, 11) of the cooling section (6) of the cooling body (4) of a further device (1) for cooling an optoelectronic module (2) that is arranged on top of the first device (1) for cooling an optoelectronic module (2).

14. The electric assembly (18) according to one of the claims 9 to 13,
**characterized in that**
at least two optoelectronic modules (2) are arranged on the circuit board (3) on top of each other when the circuit board (3) is inserted in the connecting element (19) as intended, wherein each optoelectronic module (2) is heat-conductively connected with its own device (1) for cooling an optoelectronic module (2), wherein the cooling section (6) of the cooling body (4) of a first device (1) for cooling an optoelectronic module (2) is arranged at an angle to the circuit board (3) which is greater than the angle between the cooling section (6) of the cooling body (4) of a further device (1) for cooling an optoelectronic module (2) arranged on top of the first device (1) for cooling an optoelectronic module (2).
